# EUROPEAN PATENT SPECIFICATION

(11) **EP 2 959 763 B1**
(45) Date of publication and mention of the grant of the patent: **17.10.2018**
(21) Application number: 15172865.6
(22) Date of filing: 19.06.2015
(51) Int. Cl.: A01C 23/00

(54) **A SPREADING BOOM WITH TILTABLE WINGS AND A SLURRY WAGON OR TRAILER WITH SUCH A SPREADING BOOM**
VERTEILERGESTELL MIT KLAPPBAREN AUSLEGERN ODER GÜLLEWAGEN ODER ANHÄNGER MIT SOLCH EINEM VERTEILERGESTELL
RACK DE DISTRIBUTION AVEC BRAS INCLINABLES OU CITERNE DU LISIER OU REMORQUES AVEC UNE TELLE RACK DE DISTRIBUTION

(30) Priority: 24.06.2014 DK 201400331
(43) Date of publication of application: 30.12.2015
(73) Proprietor: Sørensen, Harry Højvang, 6818 Årre (DK)
(72) Inventor: Sørensen, Harry Højvang, 6818 Årre (DK)
(74) Representative: Zacco Denmark A/S

(56) References cited:
- EP-A1- 1 444 894
- WO-A1-2005/055697
- DE-A1- 10 235 115
- US-A- 4 427 154
- US-A- 4 598 830

## Description

The present invention relates to a spreading boom, more particularly to a so-called drip hose boom for slurry wagons and trailers, wherein the side wings are individually tiltable and the boom as a whole may be tiltable in a lateral direction as well as to a slurry wagon or trailer comprising such a spreading boom.

### Background of the invention

Distribution of slurry is typically performed using a vehicle equipped with a spreading boom onto which are mounted a number of drip hoses. Over time, the widths of such booms have increased to reach a level at which level differences in the surfaces of hilly fields may exceed what the boom can handle without some of the hoses (and, in worst case scenarios, parts of the boom itself) being pressed into the ground during the slurry distribution. Apart from complicating the distribution process, this can result in damage to both machinery and crops. Furthermore, the spreading booms with the largest widths are typically unstable, because they are only fastened to a central frame and, therefore, can be deformed during acceleration or deceleration, causing very great damage on the equipment.

It has previously been attempted to solve the problems related to level differences on hilly fields by placing hydraulic cylinders at the top of the wings, with which the side wings can be raised. Such solutions, however, are costly and often constitute a weak link in the boom construction. Ropes may be used between the vehicle and the side wings to avoid deformations of the boom during acceleration, but since such a solution only works when the ropes are pulled, it has no effect when braking.

US 4,598,830 A discloses a spreading boom, the side wings of which are mounted on respective parts of a divided main frame, the two parts of which are hinged to one another and are furthermore connected by one or more hydraulic cylinders.

### Brief description of the invention

It is an object of the present invention to provide a solution, which completely or at least partly overcomes the above-mentioned disadvantages of known solutions within the art.

The present invention relates to a spreading boom, for instance in the form of a so-called drip hose boom, for slurry wagons and trailers, wherein the side wings of the boom are mounted on respective parts of a divided main frame, the two parts of which are hinged to one another in a hinge having a substantially horizontal hinge axis and are furthermore connected to each other by one or more hydraulic cylinders in such a way that the two frame parts can be rotated relatively to each other about the hinge axis in a substantially vertical plane, so that one or both side wings are tilted upwards by this rotation, the outer part of the side wing(s) being lifted relatively to the inner part, wherein the two parts of the main frame are hinged to one another at the top and the one or more hydraulic cylinders are positioned beneath the hinging between the two parts.

This configuration makes it possible to tilt the two side wings upwards so as to take into account the level differences level in the underlying terrain along the longitudinal direction of the boom in that a given side wing can be lifted to ensure that it does not interfere with the terrain where this is higher than in the surrounding areas.

By placing the hinging at the top and the cylinders beneath, problems related to the hosing of the slurry hoses when the two parts of the main frame are rotated relatively to each other are avoided, because this hosing is typically arranged along the upper edge of the spreading boom.

In an embodiment of the invention, the one or more hydraulic cylinders are arranged to perform the relative rotation between the two parts of the main frame by means of one or more telescopic joints.

The use of hydraulic cylinders combined with telescopic joints is a well-proven and reliable method for performing mechanical movements, which requires exertion of relative great force.

In an embodiment of the invention, the one or more hydraulic cylinders are arranged to be controlled individually.

In this manner, the side wings can be tilted independently of each other, which may be useful in a varying terrain.

In an embodiment of the invention, the boom is equipped with one or more distance sensors for determination of the boom height above the underlying terrain at one or more locations along the length of the boom.

The use of sensors for determination of the boom height above the terrain is very advantageous in relation to an optimized control of the height of the side wings.

In an embodiment of the invention, the spreading boom further comprises an automatic height adjustment controlling the tilting of one or both side wings so that, insofar as it is possible, the boom height above the underlying terrain is maintained within a predetermined range along the entire length of the boom.

In an embodiment of the invention, the main frame of the boom is equipped with movable connection rods, preferably with adjustable lengths, for hinging the boom to the rear end of the vehicle.

Such movable connection rods makes it possible to rotate and tilt the boom relatively to the vehicle. Furthermore, if the connection rods have adjustable lengths, the transport position of the boom relatively to the vehicle can be regulated.

In an embodiment of the invention, the main frame is arranged to be tiltable as a whole by rotation about a rotational axis parallel to the longitudinal axis of the vehicle.

The possibility of tilting the main frame (and thereby the whole spreading boom) together with the possibility of tilting the side wings of the spreading boom individually increases the flexibility when it comes to positioning the side wings of the spreading boom optimally in relation to the underlying terrain.

In an embodiment of the invention, each of the side wings of the boom is equipped with a rod connection to the respective side of the vehicle for stiffening the spreading boom, when it is in an expanded configuration with the side wings positioned substantially perpendicular to the longitudinal axis of the vehicle.

In an embodiment of the invention, the rod connections are divided into two or more hinged parts so that they can be folded, when the spreading boom is collapsed into a transport configuration with the side wings positioned substantially parallel to the longitudinal axis of the vehicle.

In an embodiment of the invention, the rod connections are equipped with one or more hydraulic cylinders for expansion and folding of the rod connections and/or for locking the rod connections in either the expanded or the folded position.

The use of a such rod connection between a point on the vehicle and a point on the boom, thus creating a triangular configuration, increases the stability of the spreading boom when in use, because compressive and tensile impacts on the boom are distributed to the vehicle. In order to secure the machine in case of collision, the outer parts of the wings may, for instance, be provided with springs, spring bolts or hydraulic pressure relief valves in the cylinders to ensure that the tip of the boom can yield if it, for instance, is hit by a fence, a tree or another obstruction.

In an aspect of the invention, it relates to a slurry wagon or trailer with a spreading boom as described above.

### The figures

In the following, a few exemplary embodiments of the invention are described in further detail with reference to the figures, in which
- Fig. 1: illustrates a slurry wagon with a spreading boom according to an embodiment of the invention as seen from the rear side, where the boom is not tilted and both of the side wings are in a horizontal position,
- Fig. 2: illustrates the same slurry wagon as seen from the rear side, where the boom as a whole is still not tilted but both side wings are tilted upwards from the horizontal position,
- Fig. 3: illustrates the same slurry wagon once again, but this time in a configuration in which the side wings are not individually tilted but the boom as a whole has been tilted to one side,
- Fig. 4a: illustrates the main frame of the spreading boom in the position shown in Fig. 2 as seen obliquely from above,
- Fig. 4b: illustrates the same main frame as seen from the rear side,
- Fig. 5: illustrates an expanded spreading boom according to an embodiment of the invention mounted at the rear end of a slurry wagon as seen obliquely from above, and
- Fig. 6: illustrates the same spreading boom as shown in Fig. 5, this time in a collapsed configuration with the side wings folded along the vehicle.

### Detailed description of the invention

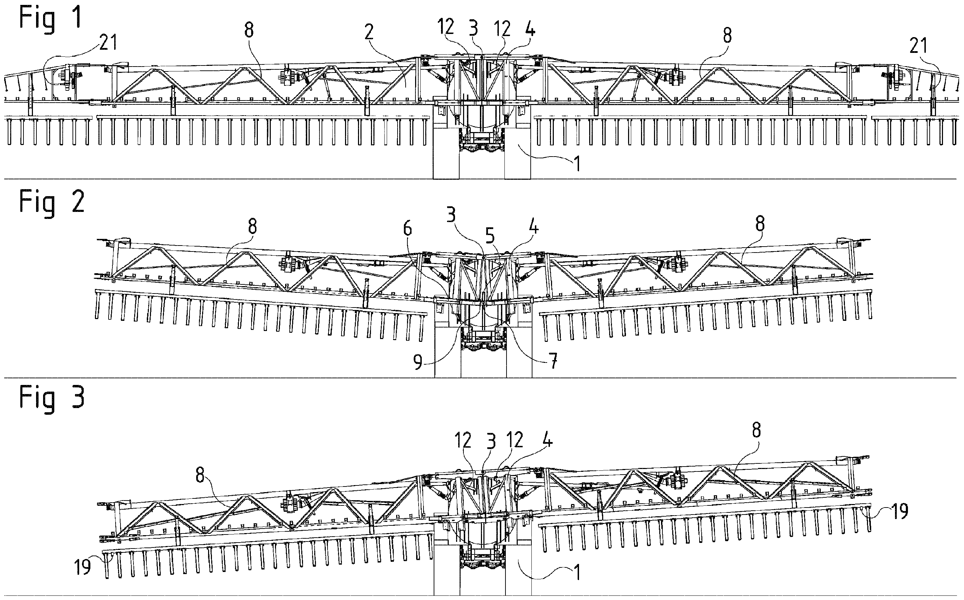

Figs. 1-3 illustrate a slurry wagon 1 with a spreading boom 2 according to an embodiment of the invention as seen from the rear side in three different configuration.

In Fig. 1, the main frame 4 and the side wings 8 of the boom 2 are in the normal position, in which the main frame 4 is not tilted relatively to the horizontal and both side wings 8 are in a horizontal position. Fig. 1 further illustrates how the spreading boom 2 can be provided with outer wings 21, which are mounted in a way so that they can be folded relatively to the side wings 8.

In Fig. 2, the main frame 4 is still not tilted, but both of the side wings 8 have been tilted upwards from the horizontal position so that the outer parts of the side wings 8 are positioned higher than the inner parts thereof. The tilting of the two side wings 8 has been performed by rotating the two parts of the main frame 4 relatively to each other in a horizontally arranged hinge 3 by means of one or more hydraulic cylinders 7 with corresponding inner 5 and outer 6 telescopic joints with a mechanical stop point 9.

Fig. 3 illustrates the slurry wagon 1 with the spreading boom 2 in a configuration, in which the side wings 8 have not been tilted relatively to each other but where the main frame 4 (and thereby the spreading boom 2 as a whole) has been tilted to one side by rotation about an axis, which is parallel to the longitudinal axis of the vehicle 1. Fig. 3 further illustrates how the side wings 8 of the spreading boom 2 can be provided with one or more distance sensors 19 for determination of the height of the side wings 8 above the underlying terrain.

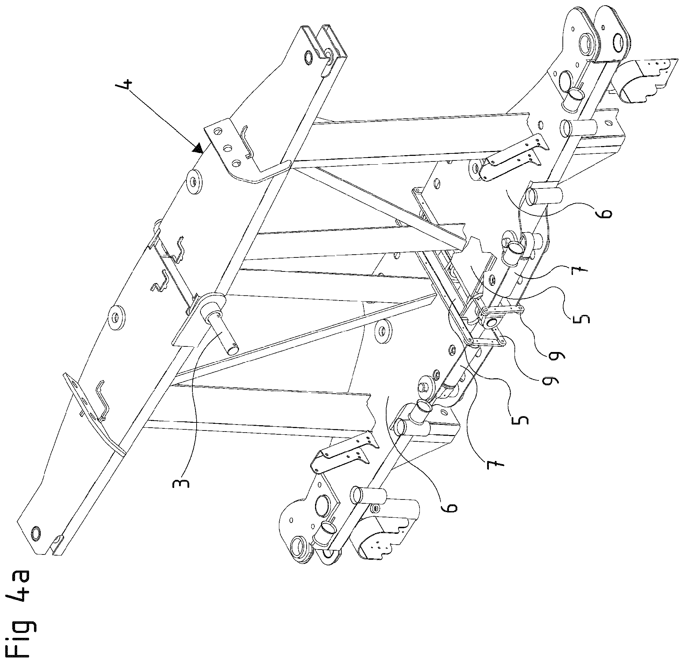

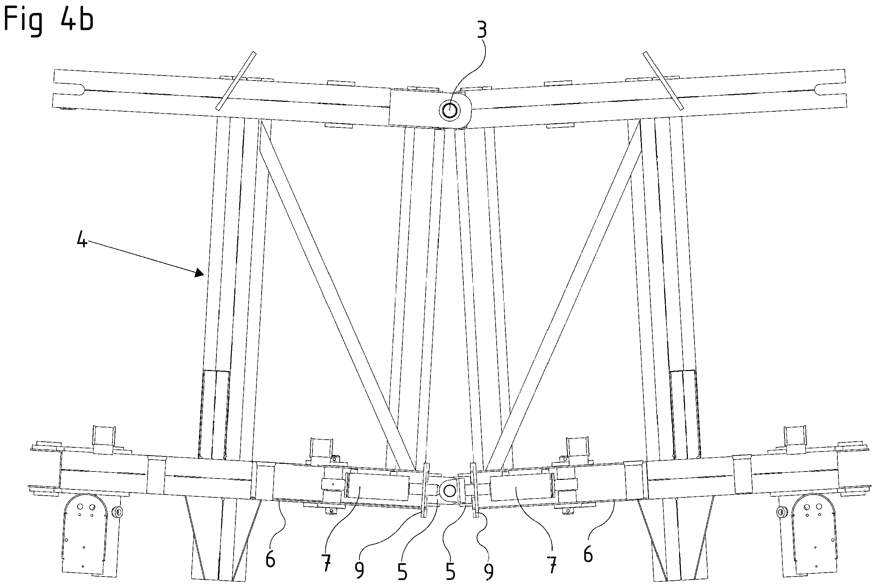

Figs. 4a and 4b illustrate the main frame 4 of the spreading boom 2 in the position shown in Fig. 2 as seen from two different angles, respectively. Here, the function and the interaction between the movements of the hydraulic cylinders 7 and the telescopic joints 5, 6, 9 on one side and the rotation of the two parts of the main frame 4 relatively to each other on the other side are seen more clearly.

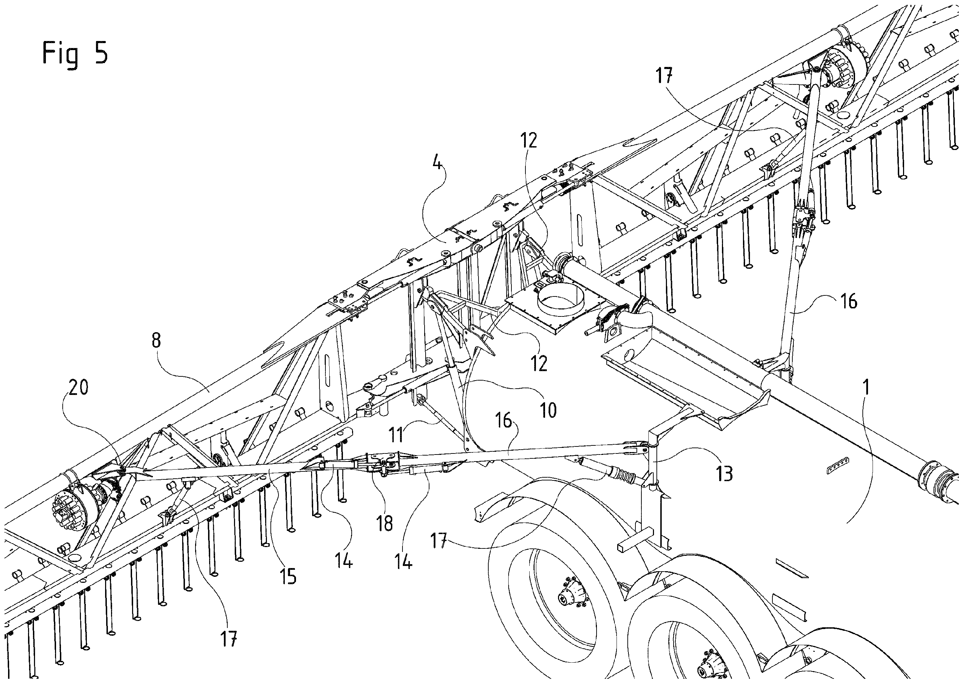

Fig. 5 illustrates an expanded spreading boom 2 according to an embodiment of the invention, which is mounted at the rear end of a slurry wagon 1 as seen obliquely from above. In this embodiment, the main frame 4 of the spreading boom 2 is mounted to the rear end of the slurry wagon 1 by means of hydraulic cylinders 10 for raising and lowering the spreading boom 2, adjustable connection rods 11 at the bottom for controlling the position of the boom 2 relatively to the slurry wagon 1 and triangular connections 12 at the top. By individual control of the hydraulic cylinders 10, a tilting of the main frame 4 and thereby of the spreading boom 2 as a whole can be obtained through a rotation about an axis, which is parallel to the longitudinal axis of the vehicle 1.

Furthermore, foldable rod connections constituted by an inner rod connection 16 and an outer rod connection 15, which are connected to each other in a double-hinged knuckle joint 18, are arranged in both sides. The illustrated rod connections 15, 16, 18 connect fastening points 13 on the vehicle 1 to fastening points 20 on the side wings 8 in such a way that, when the boom 2 is in its expanded working position, a triangular construction is formed for stiffening the side wings 8 during motion of the slurry wagon 1. As is also illustrated in the figure, the rod connection 15, 16, 18 can be provided with supports 17 in one or both ends as well as with one or more hydraulic cylinders 14 for controlling the expansion and the folding of the rod connection 15, 16, 18 and/or for locking it in one position or the other. These supports 17 are arranged to adjust to different working heights of the side wings 8 depending on the tilting of the side wings 8 and/or the spreading boom 2 as a whole.

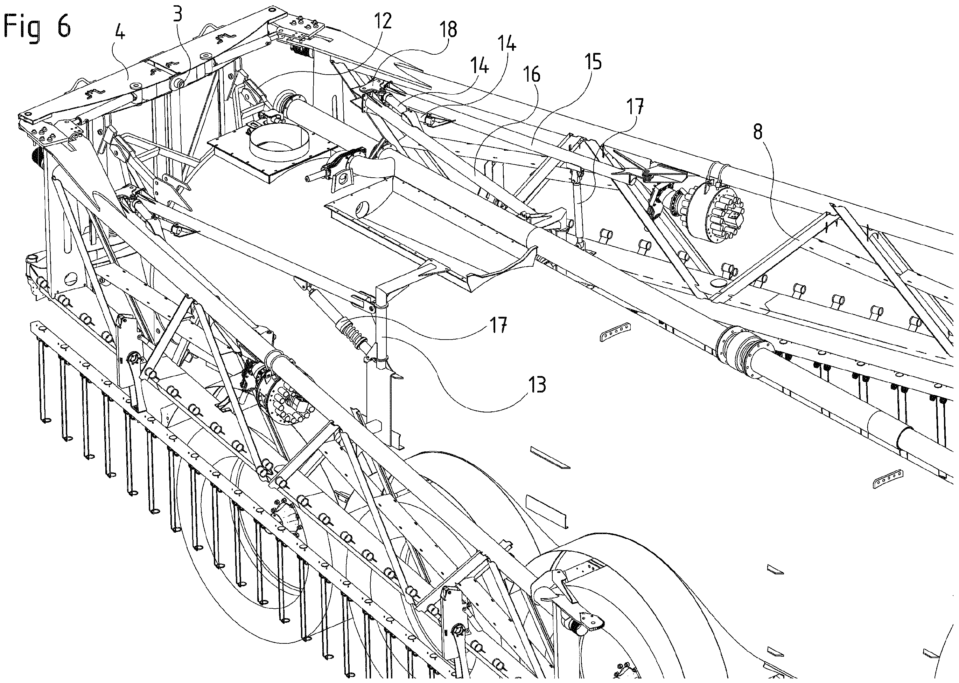

Fig. 6 illustrates the same spreading boom 2 as shown in Fig. 5, this time in a collapsed configuration with the side wings 8 folded along the vehicle 1.

For the sake of clarity, some elements of the vehicle 1 and the spreading boom 2 (such as for instance the slurry hoses), which are not directly relevant for the understanding of the present invention, have been omitted from the figures.

For the raising and lowering of the boom 2, single- or double-acting cylinders 10 can be used, making it possible to control the slope of the boom 2 and/or to provide a self-levelling function. A floating function can be obtained by interconnecting the lifting sides of the cylinders 10. A more fixed movement can be obtained by supplying oil to the cylinders 10 individually, whereby a tilting of the boom 2 as a whole can be achieved, for instance in the case of uneven terrain or single-sided slurry application. In order to enhance the tilt, an additional oil pressure can be applied on the pull side of a cylinder 10.

### List of reference numbers

1. Vehicle
2. Spreading boom
3. Hinge
4. Main frame
5. Inner telescopic joint
6. Outer telescopic joint
7. Hydraulic cylinder for tilting wing
8. Side wings
9. Stop point for telescopic parts
10. Hydraulic cylinder for lifting spreading boom
11. Connection rod
12. Triangle
13. Fastening point on vehicle
14. Hydraulic cylinder for locking and folding rod connection
15. Outer rod connection
16. Inner rod connection
17. Support for rod connection
18. Double-hinged knuckle joint in rod connection
19. Sensor for height measurement
20. Fastening point on spreading boom
21. Outer wing of spreading boom

## Claims

1. A spreading boom (2), for instance in the form of a so-called drip hose boom, for slurry wagons and trailers (1), wherein the side wings (8) of the boom are mounted on respective parts of a divided main frame (4), the two parts of which are hinged to one another in a hinge (3) having a substantially horizontal hinge axis and are furthermore connected to each other by one or more hydraulic cylinders (7) in such a way that the two frame parts can be rotated relatively to each other about the hinge axis in a substantially vertical plane, so that one or both side wings are tilted upwards by this rotation, the outer part of the side wing(s) being lifted relatively to the inner part,
**characterised in that** the two parts of the main frame are hinged to one another at the top and the one or more hydraulic cylinders are positioned beneath the hinge between the two parts.

2. The spreading boom according to claim 1, wherein the one or more hydraulic cylinders are arranged to perform the relative rotation between the two parts of the main frame by means of one or more telescopic joints (5, 6).

3. The spreading boom according to claim 1 or 2, wherein the one or more hydraulic cylinders are arranged to be controlled individually.

4. The spreading boom according to any of the preceding claims, wherein the boom is equipped with one or more distance sensors (19) for determination of the boom height above the underlying terrain at one or more locations along the length of the boom.

5. Spreading boom according to claim 4, further comprising an automatic height adjustment controlling the tilting of one or both side wings so that, insofar as it is possible, the boom height above the underlying terrain is maintained within a predetermined range along the entire length of the boom.

6. The spreading boom according to any of the preceding claims, wherein the main frame of the boom is equipped with movable connection rods (11), preferably with adjustable lengths, for hinging the boom to the rear end of the vehicle.

7. The spreading boom according to any of the preceding claims, wherein the main frame is arranged to be tiltable as a whole by rotation about a rotational axis parallel to the longitudinal axis of the vehicle.

8. The spreading boom according to any of the preceding claims, wherein each of the side wings of the boom is equipped with a rod connection (15, 16) to the respective side of the vehicle for stiffening the spreading boom, when it is in an expanded configuration with the side wings positioned substantially perpendicular to the longitudinal axis of the vehicle.

9. The spreading boom according to claim 8, wherein the rod connections are divided into two or more hinged parts (15, 16) so that they can be folded, when the spreading boom is collapsed into a transport configuration with the side wings positioned substantially parallel to the longitudinal axis of the vehicle.

10. The spreading boom according to claim 9, wherein the rod connections are equipped with one or more hydraulic cylinders (14) for expansion and folding of the rod connections and/or for locking the rod connections in either the expanded or the folded position.

11. A slurry wagon or trailer (1) with a spreading boom (2) according to any of the preceding claims.

## Patentansprüche

1. Verteilergestell (2), beispielsweise in Form eines sogenannten Tropfschlauchgestells, für Güllewagen und Anhänger (1), wobei die Seitenausleger (8) des Gestells auf jeweiligen Teilen eines geteilten Hauptrahmens (4) montiert sind, wobei dessen zwei Teile in einem Scharnier (3) mit einer im Wesentlichen horizontalen Scharnierachse aneinander angelenkt sind und ferner durch einen oder mehrere Hydraulikzylinder (7) derart miteinander verbunden sind, dass die zwei Rahmenteile in Bezug zueinander um die Scharnierachse in einer im Wesentlichen vertikalen Ebene gedreht werden können, sodass ein oder beide Seitenausleger durch diese Drehung nach oben geneigt werden, wobei der äußere Teil des Seitenauslegers bzw. der Seitenausleger in Bezug zu dem inneren Teil angehoben wird,
**dadurch gekennzeichnet, dass** die zwei Teile des Hauptrahmens an der Oberseite aneinander angelenkt sind und der eine oder die mehreren Hydraulikzylinder unter dem Scharnier zwischen den zwei Teilen positioniert sind.

2. Verteilergestell nach Anspruch 1, wobei der eine oder die mehreren Hydraulikzylinder so angeordnet sind, dass sie die relative Drehung zwischen den zwei Teilen des Hauptrahmens mittels eines oder mehrerer Teleskopgelenke (5, 6) durchführen.

3. Verteilergestell nach Anspruch 1 oder 2, wobei der eine oder die mehreren Hydraulikzylinder so angeordnet sind, dass sie einzeln gesteuert werden können.

4. Verteilergestell nach einem der vorstehenden Ansprüche, wobei das Gestell mit einem oder mehreren Abstandssensoren (19) zur Bestimmung der Gestellhöhe über dem darunterliegenden Gelände an einer oder mehreren Stellen entlang der Länge des Gestells ausgestattet ist.

5. Verteilergestell nach Anspruch 4, ferner umfassend eine automatische Höhenverstellung, welche die Neigung von einem oder beiden Seitenauslegern steuert, sodass, soweit es möglich ist, die Gestellhöhe über dem darunterliegenden Gelände innerhalb eines vorher festgelegten Bereichs entlang der gesamten Länge des Gestells aufrechterhalten wird.

6. Verteilergestell nach einem der vorstehenden Ansprüche, wobei der Hauptrahmen des Gestells mit beweglichen Verbindungsstangen (11), vorzugsweise mit einstellbaren Längen, zum Anlenken des Gestells an das hintere Ende des Fahrzeugs ausgestattet ist.

7. Verteilergestell nach einem der vorstehenden Ansprüche, wobei der Hauptrahmen so angeordnet ist, dass er als Ganzes durch Drehung um eine Drehachse parallel zu der Längsachse des Fahrzeugs kippbar ist.

8. Verteilergestell nach einem der vorstehenden Ansprüche, wobei jeder der Seitenausleger des Gestells mit einer Stangenverbindung (15, 16) zur jeweiligen Seite des Fahrzeugs zum Versteifen des Verteilergestells ausgestattet ist, wenn es sich in einer expandierten Konfiguration befindet, wobei die Seitenausleger im Wesentlichen senkrecht zu der Längsachse des Fahrzeugs positioniert sind.

9. Verteilergestell nach Anspruch 8, wobei die Stangenverbindungen in zwei oder mehr angelenkte Teile (15, 16) unterteilt sind, sodass sie gefaltet werden können, wenn das Verteilergestell in eine Transportkonfiguration zusammengeklappt wird, wobei die Seitenausleger im Wesentlichen parallel zu der Längsachse des Fahrzeugs positioniert sind.

10. Verteilergestell nach Anspruch 9, wobei die Stangenverbindungen mit einem oder mehreren Hydraulikzylindern (14) zum Erweitern und zum Falten der Stangenverbindungen und/oder zum Arretieren der Stangenverbindungen in entweder der expandierten oder der gefalteten Position ausgestattet sind.

11. Güllewagen oder Anhänger (1) mit einem Verteilergestell (2) nach einem der vorstehenden Ansprüche.

## Revendications

1. Rack de distribution (2), par exemple sous la forme d'un rack dit à pendillards, pour remorques et citernes de lisier (1), dans lequel les bras latéraux (8) du rack sont montés sur des parties respectives d'un châssis principal (4) divisé, dont les deux parties sont articulées l'une à l'autre dans une charnière (3) ayant un axe de charnière sensiblement horizontal et sont en outre reliées l'une à l'autre par un ou plusieurs cylindres hydrauliques (7) d'une manière telle que les deux parties de châssis peuvent être tournées l'une par rapport à l'autre autour de l'axe de charnière dans un plan sensiblement vertical, de sorte que l'un et/ou l'autre des bras latéraux sont inclinés vers le haut par cette rotation, la partie externe du ou des bras latéraux étant soulevée par rapport à la partie interne,
**caractérisé en ce que** les deux parties du châssis principal sont articulées l'une à l'autre au niveau du sommet et le ou les cylindres hydrauliques sont positionnés sous la charnière entre les deux parties.

2. Rack de distribution selon la revendication 1, dans lequel le ou les cylindres hydrauliques sont agencés pour effectuer la rotation relative entre les deux parties du châssis principal au moyen d'une ou plusieurs articulations télescopiques (5, 6).

3. Rack de distribution selon la revendication 1 ou 2, dans lequel le ou les cylindres hydrauliques sont agencés pour être commandés individuellement.

4. Rack de distribution selon l'une quelconque des revendications précédentes, dans lequel le rack est équipé d'un ou plusieurs capteurs de distance (19) pour déterminer la hauteur de rack au-dessus du terrain sous-jacent en un ou plusieurs emplacements sur la longueur du rack.

5. Rack de distribution selon la revendication 4, comprenant en outre un réglage automatique de hauteur commandant l'inclinaison de l'un et/ou l'autre des bras latéraux de sorte que, dans la mesure du possible, la hauteur de rack au-dessus du terrain sous-jacent est maintenue dans une plage prédéfinie sur toute la longueur du rack.

6. Rack de distribution selon l'une quelconque des revendications précédentes, dans lequel le châssis principal du rack est équipé de tiges de liaison mobiles (11), de préférence à longueurs réglables, pour l'articulation du rack à l'extrémité arrière du véhicule.

7. Rack de distribution selon l'une quelconque des revendications précédentes, dans lequel le châssis principal est agencé pour être inclinable dans son ensemble par rotation autour d'un axe de rotation parallèle à l'axe longitudinal du véhicule.

8. Rack de distribution selon l'une quelconque des revendications précédentes, dans lequel chacun des bras latéraux du rack est muni d'une liaison de tige (15, 16) sur le côté respectif du véhicule pour rigidifier le rack de distribution, lorsqu'il est en configuration déployée avec les bras latéraux positionnés de façon sensiblement perpendiculaire à l'axe longitudinal du véhicule.

9. Rack de distribution selon la revendication 8, dans lequel les liaisons de tige sont divisées en deux ou plusieurs parties articulées (15, 16) de manière à pouvoir être pliées, lorsque le rack de distribution est replié dans une configuration de transport, les bras latéraux étant positionnés de façon sensiblement parallèle à l'axe longitudinal du véhicule.

10. Rack de distribution selon la revendication 9, dans lequel les liaisons de tige sont équipées d'un ou plusieurs cylindres hydrauliques (14) pour l'expansion et le pliage des liaisons de tige et/ou pour le verrouillage des liaisons de tige dans la position déployée ou repliée.

11. Remorque ou citerne de lisier (1) comprenant un rack de distribution (2) selon l'une quelconque des revendications précédentes.
